# EUROPÄISCHE PATENTSCHRIFT

(11) **EP 4 221 161 B1**
(45) Veröffentlichungstag und Bekanntmachung des Hinweises auf die Patenterteilung: **21.08.2024**
(21) Anmeldenummer: 22154344.0
(22) Anmeldetag: 31.01.2022
(51) Int. Cl.: H04L 67/55, H04W 4/021, H04L 67/50, H04L 67/62, H04W 4/02

(54) **VERMITTLUNG EINER ERWEITERTEN REALITÄT AN EINER MOBILEN CLIENTEINRICHTUNG**
SHARING OF AN EXTENDED REALITY ON A MOBILE CLIENT DEVICE
TRANSMISSION D'UNE RÉALITÉ AUGMENTÉE À UN APPAREIL CLIENT MOBILE

(43) Veröffentlichungstag der Anmeldung: 02.08.2023
(73) Patentinhaber: Deutsche Telekom AG, 53113 Bonn (DE)
(72) Erfinder: SPEICH, Jan, 53757 Sankt Augustin (DE); SCHRAGE, Elmar, 53347 Alfter (DE)
(74) Vertreter: Nern, Peter-Michael

(56) Entgegenhaltungen:
- CN-A- 110 958 325
- US-A1- 2009 315 766
- WU CHIEN-CHENG ET AL: "On local cache management strategies for Mobile Augmented Reality", PROCEEDING OF IEEE INTERNATIONAL SYMPOSIUM ON A WORLD OF WIRELESS, MOBILE AND MULTIMEDIA NETWORKS 2014, IEEE, 19 June 2014 (2014-06-19), pages 1 - 3, XP032656340, DOI: 10.1109/WOWMOM.2014.6919021
- KIM MINKYONG ET AL: "CARS : Collaborative Augmented Reality for Socialization", HOTMOBILE '18 PROCEEDINGS OF THE 19TH INTERNATIONAL WORKSHOP ON MOBILE COMPUTING SYSTEMS & APPLICATIONS, TEMPE, AZ, USA, 12 February 2018 (2018-02-12), New York, NY, USA, pages 25 - 30, XP055932581, ISBN: 978-1-4503-5630-5, Retrieved from the Internet <URL:https://dl.acm.org/doi/pdf/10.1145/3177102.3177107> DOI: 10.1145/3177102.3177107

## Beschreibung

Die Erfindung betrifft eine Lösung zur Vermittlung einer erweiterten Realität an einer mobilen Clienteinrichtung, wobei die von einem Nutzer einer solchen Clienteinrichtung an der betreffenden Einrichtung optisch tatsächlich erfasste Umgebung (Realität) um eine virtuelle Realität ergänzt wird. Sie bezieht sich hierbei auf ein entsprechendes Verfahren, nämlich auf ein Verfahren zur Vermittlung einer erweiterten Realität an der zumindest ein Endgerät zur Nutzung des Mobilfunknetzes umfassenden, von dem Nutzer mitgeführten mobilen Clienteinrichtung.

Techniken zur Nutzung einer erweiterten Realität, nämlich einer durch eine Person optisch wahrgenommenen Realität, die um virtuelle, das heißt um durch diese Person ohne computertechnische Hilfsmittel so nicht wahrgenommene Elemente ergänzt wird, sind bereits seit längerem bekannt. Sie werden, abgesehen von ihrer breiten Nutzung im Bereich der Computerspiele, unter anderem in der Wirtschaft, zum Beispiel in den Bereichen Entwicklung und Konstruktion, genutzt.

So kann beispielsweise einem Konstrukteur unter Nutzung entsprechender computertechnischer Hilfsmittel die Möglichkeit gegeben werden, an einem technischen Objekt auch Merkmale optisch wahrzunehmen, die, weil sie zum Beispiel verdeckt oder in dessen Innern ausgeprägt sind, für ihn ohne diese technischen Hilfsmittel nicht wahrnehmbar wären. Darüber hinaus ist ein mögliches Einsatzgebiet die Vermittlung von zusätzlichen Informationen zu durch entsprechend interessierte Personen in ihrem Umfeld wahrnehmbaren Objekten. Zu denken ist beispielsweise an Informationen zu einem durch einen Betrachter wahrgenommenen Museumsexponat.

Da zwischenzeitlich jedoch Hilfsmittel, welche die Vermittlung einer solchen erweiterten Realität ermöglichen, nicht nur für die wirtschaftliche und sonstige gewerbliche Nutzung zur Verfügung stehen, sondern auch durch den Endnutzer, respektive durch Privatkunden, zu erschwinglichen Preisen erworben werden können, tun sich für die Nutzung dieser Technologie weitere Möglichkeiten auf. Diese Möglichkeiten basieren im Allgemeinen auf der Verwendung von durch einen Nutzer zu tragenden Spezialbrillen (VR-Brillen, mit VR = virtual reality), welche nach dem derzeitigen Stand der Technik zumeist in Kombination mit mobilen, computerbasierten sowie entsprechend leistungsfähigen Endgeräten, wie beispielsweise Smartphones (companion devices), verwendet werden. Hierbei werden Daten, welche eine virtuelle Realität kodieren, durch das betreffende mobile Endgerät verarbeitet und an den gleichzeitig ein transparentes Display darstellenden Gläsern einer entsprechenden, vom Nutzer als ein so genanntes Wearable getragenen Brille mit elektronischen Funktionalitäten nach ihrer drahtlos, beispielsweise über Bluetooth, erfolgenden Übertragung visualisiert.

Auf diese Weise ist es möglich, beispielsweise einem eine entsprechende Clienteinrichtung (typischerweise Kombination aus Brille und Smartphone) mit sich führenden Besucher einer Stadt zusätzliche Informationen zu Gebäuden, Sehenswürdigkeiten oder in sonstiger Weise interessanten Punkten (Points of Interest = POI) zu vermitteln, und zwar durch Ergänzung der von dem Nutzer/Besucher über die Brille tatsächlich wahrgenommenen Realität um eine virtuelle Realität. Bei den besagten Informationen kann es sich beispielsweise im Hinblick auf ein Gebäude um architektonische oder geschichtliche Hintergrundinformationen handeln, aber ebenso auch um ein die optische, respektive visuelle Realität durch entsprechende Einblendung ergänzendes Firmenlogo, welches den Benutzer auf einen in dem Gebäude befindlichen Shop oder auf eine gastronomische Einrichtung aufmerksam macht.

Die Vermittlung einer Vielzahl solcher zusätzlicher Informationen, zum Beispiel in einem Stadtgebiet, erfordert ein nicht unbeträchtliches, die betreffenden Informationen kodierendes Datenvolumen. Von daher wären gebräuchliche mobile Endgeräte hinsichtlich ihrer zur Verfügung stehenden Speicherkapazität sehr schnell überfordert, wenn in ihrem Speicher etwa Daten abgelegt würden, welche eine virtuelle Realität zu einer Vielzahl von Gebäuden oder dergleichen in einer Großstadt, wie Berlin oder Hamburg, vermitteln. Unter Berücksichtigung dessen wäre es beispielsweise auch denkbar, die entsprechenden Daten in Form eines durch einen zentralen Dienst ständig ausgesendeten Live-Streams innerhalb des Stadtgebiets zur Verfügung zu stellen. Allerdings könnten hierbei Unterbrechungen der zum Empfang des Streams erforderlichen Verbindung oder Verzögerungen beim Download aufgrund von Einschränkungen der zur Verfügung stehenden Übertragungsbandbreite zu einer Verschlechterung des Erfahrungsempfindens (User Experience) entsprechende Funktionen nutzender Personen führen.

Jedoch sind bereits Lösungen entwickelt worden, welche beiden zuvor angesprochenen Problemen Rechnung tragen Eine Möglichkeit besteht demnach darin, die jeweiligen, eine virtuelle Realität kodierenden Daten von einem sie bereitstellenden zentralen Dienst schon an die Clienteinrichtung zu übertragen, bevor sie dort zur Verarbeitung für den Zweck ihrer Visualisierung benötigt werden, aber andererseits erst dann, wenn sich die Clienteinrichtung bereits in der Nähe des POI befindet. Eine solche als Pre-Loading bezeichnete Vorgehensweise wird beispielsweise in der CN 110 958 325 A beschrieben. Aus der US 2009/035766 A1 ist es ferner bekannt, entsprechende seitens eines zentralen Dienstes gehaltene Daten zu potenziell interessierenden POI an historische, sich auf einen jeweiligen Nutzer beziehende Daten, so beispielsweise auch an dessen Bewegungsgeschwindigkeit, anzupassen.

Darüber hinaus gibt es Ansätze, welche auf einer Peer-to-Peer-Übertrageng sich auf POI beziehender Daten und Informationen zwischen einzelnen Nutzern beruhen. Derartiges wird beispielsweise beschrieben durch Kim Minkyong et al. in "CARS: Collaborative Augmented Reality for Socialization" (HotMobile'18, Proceedings of the 19th International Workshop on Mobile Computing Systems & Applications, Tempe; AZ, U.S.A., 12. Februar 2018).

Aufgabe der Erfindung ist es, eine alternative Lösung zur Überwindung der vorgenannten Nachteile anzugeben, welche darüber hinaus gegenüber den dazu bereits bekannt gewordenen Lösungen weitere Vorteile aufweist. Die entsprechende Lösung soll es insbesondere ermöglichen, ihren Nutzern trotz bestehender Beschränkungen bei der Leistungsfähigkeit und der Speicherkapazität mobiler Endgeräte eine positive Nutzererfahrung zu vermitteln. Hierzu ist ein geeignetes Verfahren anzugeben.

Ein die Aufgabe lösendes Verfahren wird durch die Merkmale des Patentanspruchs 1 charakterisiert. Vorteilhafte Aus- und/oder Weiterbildungen der Erfindung sind durch die Unteransprüche gegeben.

Das zur Lösung der Aufgabe vorgeschlagene Verfahren zur Vermittlung einer erweiterten Realität an einer mobilen Clienteinrichtung bezieht sich auf eine Clienteinrichtung, welche zumindest ein Endgerät zur Nutzung des Mobilfunknetzes umfasst. Insoweit sind hierbei in Bezug auf die besagte Clienteinrichtung unterschiedliche Konfigurationen denkbar. So kann die Clienteinrichtung etwa aus einer Brille, nämlich einer VR-Brille, und aus einem Mobilfunkgerät, wie insbesondere einem Smartphone, bestehen, welches beispielsweise mit der ebenfalls diverse elektronische Komponenten aufweisenden VR-Brille über Bluetooth gekoppelt ist. Das Smartphone fungiert hierbei für die VR-Brille als sogenanntes companion device, also als ein Begleitgerät, über welches ein Zugang zum Mobilfunknetz und damit zum Internet gegeben ist. Die Vermittlung der erweiterten Realität erfolgt über die vom Nutzer getragene VR-Brille, wobei durch das Mobilfunkgerät über die Bluetooth-Verbindung Daten an die VR-Brille übermittelt und mittels der Brille, deren Gläser gleichzeitig jeweils ein transparentes Display ausbilden, visualisiert werden.

Denkbar ist es aber auch, dass eine solche mobile Clienteinrichtung ausschließlich durch ein Mobilfunkgerät, also insbesondere ein Smartphone, repräsentiert wird, welches die seinen Nutzer umgebende Realität mittels einer Kamera erfasst. Die erweiterte Realität - zum Verständnis dieses Begriffs im Kontext der Erfindungsbeschreibung später mehr - wird dem die solchermaßen ausgebildete mobile Clienteinrichtung mit sich führenden Nutzer über ein Display des Mobilfunkgeräts präsentiert, respektive vermittelt. Nicht zuletzt ist es darüber hinaus selbstverständlich auch möglich, dass die mobile Clienteinrichtung ausschließlich durch eine VR-Brille ausgebildet wird, die mit entsprechend hoch integrierter Technik, nämlich insbesondere mit einer Verarbeitungseinrichtung, einem Speicher und einem SIM (Subscriber Identity Modul), vorzugsweise in Form eines elektronischen SIM (eSIM = embedded SIM), ausgestattet ist.

Die Vermittlung der erweiterten Realität geschieht, unabhängig von der jeweiligen Konfiguration der Clienteinrichtung, indem in einem Speicher der von dem Nutzer mitgeführten Clienteinrichtung gehaltene Daten, welche eine mit einem Objekt an einem aktuellen Aufenthaltsort des Nutzers verknüpfte virtuelle Realität kodieren, durch eine von einer Verarbeitungseinrichtung der Clientanordnung ausgeführte Programmanwendung zum Zwecke ihrer Visualisierung verarbeitet werden. Die Visualisierung dieser, die virtuelle Realität kodierenden Daten erfolgt dann nach entsprechender Verarbeitung in Ergänzung zu dem durch den Nutzer an seinem Aufenthaltsort an der Clienteinrichtung unmittelbar, respektive direkt mittels seiner Augen oder mittels einer Kamera der Clienteinrichtung, als Teil der den Nutzer umgebenden Realität, optisch erfassten Objekt.

Im erstgenannten Fall, welcher sich auf die optisch unmittelbare Erfassung des Objekts, respektive der Realität, durch die Gläser einer Brille (VR-Brille) hindurch bezieht, erfolgt die Vermittlung der erweiterten Realität an besagter Brille, durch Ergänzung der durch die Brillengläser erfassten (objektiven, respektive tatsächlichen) Realität durch Visualisierung der virtuellen Realität auf der den Augen des Nutzers zugewandten Seite der gleichzeitig als ein transparentes Display fungierenden Brillengläser. Im letztgenannten Fall hingegen wird die mittels einer Kamera der Clienteinrichtung erfasste Realität zusammen mit der virtuellen Realität auf einem Display, wie beispielsweise dem Display eines Smartphones ausgegeben (visualisiert).

Die von dem Nutzer mitgeführte Clienteinrichtung ist während der Ausführung der vorgenannten, die Daten zur virtuellen Realität verarbeitenden Programmanwendung über das Mobilfunknetz mit einem Serverdienst verbunden und wird während des Bestehens dieser Verbindung durch diesen Serverdienst hinsichtlich ihrer jeweiligen geolokalen Position getrackt. Das Tracking kann beispielsweise auf der Basis durch die mobile Clienteinrichtung an den Serverdienst übermittelter GPS-Daten erfolgen, aber auch auf der Grundlage von Zellinformationen zu dem in das Mobilfunknetz eingebuchten mobilen Endgerät der Clienteinrichtung (zum Beispiel Funkzellenortung). Auch eine Kombination beider vorgenannten Lokalisierungstechniken ist denkbar.

Gemäß dem vorgeschlagenen Verfahren werden die mit einem Objekt verknüpften, zur Visualisierung mittels der Programmanwendung durch die Verarbeitungseinrichtung der Clienteinrichtung zu verarbeitenden Daten, also die eine virtuelle, mit dem Objekt verknüpfte Realität kodierenden Daten, in einer Datenbank des Serverdienstes gehalten und erst beim Unterschreiten einer minimalen, in Einrichtungen des Serverdienstes hinterlegten Distanz (im Weiteren minimale Objektdistanz) an die Clienteinrichtung zur Ablage in deren Speicher übertragen. Die vorgenannte Distanz bezieht sich hierbei auf eine Distanz zwischen der Clienteinrichtung und dem mit einer virtuellen Realität verknüpften Objekt. Die Übertragung der entsprechenden Daten erfolgt darüber hinaus aber auch nur, sofern eine diesen Daten in der Datenbank des Serverdienstes zugeordnete Kategorie in einer ebenfalls in dieser Datenbank des Serverdienstes gehaltenen Präferenzliste des Nutzers der Clienteinrichtung enthalten ist.

Die Daten zu einer mit einem Objekt verknüpften virtuellen Realität sind also weder gewissermaßen von vornherein, nämlich mit der Installation der besagten Programmanwendung (App) in der Clienteinrichtung, das heißt in deren Speicher, gespeichert noch werden sie erst dann, wenn sich der Nutzer bereits unmittelbar an dem mit ihnen verknüpften Objekt befindet, respektive seiner ansichtig wird, als Stream an die Clienteinrichtung übertragen. Vielmehr erfolgt gewissermaßen ein Pre-Load dieser Daten, wenn der Nutzer sich noch in einem gewissen Abstand zu dem jeweiligen Objekt befindet, welcher der minimalen Objektdistanz, nämlich einer minimalen, in Einrichtungen des Serverdienstes hinterlegten Distanz zwischen der Clienteinrichtung und dem mit den Daten verknüpften Objekt, entspricht. Der entsprechende Pre-Load der die virtuelle Realität betreffenden Daten und ihre Visualisierung erfolgt indes, wie bereits ausgeführt, nur, sofern diese einer in einer zu dem Nutzer bei dem Serverdienst geführten Präferenzliste enthaltenen Kategorie entsprechen.

Die entsprechende Präferenzliste, respektive die darin enthaltenen (Interessens-) Kategorien kann/können zum Beispiel mittels einer Einstellungsfunktion der durch die Verarbeitungseinrichtung der Clienteinrichtung ausgeführten Programmanwendung durch den Nutzer konfigurierbar und modifizierbar sein. Das heißt, die Präferenzliste für einen Nutzer wird bei einer derartigen Implementierung des Verfahrens zwar in einer Datenbank des Serverdienstes in Zuordnung zu einer den Nutzer identifizierenden Kennung gehalten, aber dort vom Nutzer selbst mittels seiner Clienteinrichtung und der von ihr verarbeiteten Programmanwendung angelegt und gepflegt. Für den bevorzugten, die Erfindung aber nicht dahingehend beschränkenden Anwendungsfall, der Vermittlung einer erweiterten Realität bei einer Stadt- oder Landschaftsbegehung, kommen hinsichtlich der Kategorien für die virtuelle Realität beispielsweise Kategorien wie Architektur, Historie/Geschichte, Technik, Dienstleistung, Gastronomie, Werbung/Werbeangebote und dergleichen mehr in Betracht.

Im Hinblick darauf, dass die Begriffe erweiterte Realität und virtuelle Realität und diesbezügliche Abkürzungen, respektive Akronyme, wie XR, AR und VR, auch in der Literatur teilweise unterschiedlich verwendet werden, soll an dieser Stelle auf deren Verwendung im Kontext der hier beschriebenen und beanspruchten Lösung eingegangen werden. Nach dem hier zugrundeliegenden Verständnis wird demnach zwischen der (tatsächlichen) Realität, einer virtuelle Realität und einer erweiterten Realität unterschieden. Als Realität wird - was sicherlich keiner weiteren Erläuterung bedarf - das angesehen, was den Nutzer einer mobilen Clienteinrichtung tatsächlich umgibt, also von diesem insbesondere optisch wahrgenommen wird.

Wie bereits ausgeführt, kann der Nutzer die Realität dabei, nämlich während des Ablaufs des Verfahrens, durch die Gläser einer VR-Brille wahrnehmen, alternativ aber auch mit Hilfe eines ihm auf einem Display eines Mobilfunkgeräts visualisierten Kamerabildes. Unter virtueller Realität werden nach dem hier zugrundeliegenden Verständnis Dinge und Sachverhalte verstanden, die von dem Nutzer optisch wahrgenommen werden können, aber nicht Teil der ihn umgebenden (tatsächlichen) Realität sind. Eine erweiterte Realität ergibt sich dadurch, dass die (tatsächliche) Realität mit der visualisierten virtuellen Realität kombiniert wird, so dass der Nutzer über die gleichzeitig ein transparentes Display ausbildenden Gläser der VR-Brille die durch die visualisierte virtuelle Realität überlagerte Realität optisch wahrnimmt. Entsprechendes gilt in Bezug auf die Vermittlung einer solchen erweiterten Realität auf dem Display eines Smartphones, welches demnach die mittels einer Kamera aufgenommene Realität überlagert durch die virtuelle Realität visualisiert. Bei der visualisierten virtuellen Realität kann es sich in diesem Zusammenhang um Bilder (gegebenenfalls auch Fotos), Text oder Symbole, wie Piktogramme, Firmenlogos und dergleichen, handeln.

Was die bereits mehrfach angesprochene minimale Objektdistanz anbelangt, also diejenige Distanz zwischen einem Objekt und der Clienteinrichtung des Nutzers, bei deren Erreichen der Pre-Load der Daten der mit dem betreffenden Objekt verknüpften virtuellen Realität erfolgt, so wären grundsätzlich unterschiedliche Verfahrensgestaltungen möglich. Denkbar wäre es insoweit, dass in Einrichtungen des, bei der praktischen Umsetzung des Verfahrens, von einer Vielzahl von Nutzern und ihren mobilen Clienteinrichtungen genutzten Serverdienstes ein generalisierender und starrer Wert hinterlegt ist. Die minimale Objektdistanz wäre hierbei unabhängig von einem jeweiligen Objekt und vom Volumen der mit diesem in der Datenbank des Serverdienstes zur Kodierung einer virtuellen Realität verknüpften Daten, aber auch unabhängig vom Bewegungsverhalten eines Nutzers des Serverdienstes. Dies ist jedoch nicht der hier gewählte Weg.

Vielmehr ergeben sich Vorteile durch eine Flexibilisierung der minimalen Objektdistanz, wenn also der für diese in den Einrichtungen des Serverdienstes gehaltene Wert, ausgehend von einem initialen Wert, veränderlich ist. Für eine derartige Flexibilisierung wird gemäß dem Verfahren mit jedem in der Datenbank des Serverdienstes mit Daten zur Kodierung einer virtuelle Realität verknüpften Objekt ein speziell auf das jeweilige Objekt bezogener Wert für die minimale Objektdistanz verknüpft.

Ferner wird der, wie gesagt, veränderliche Wert für die einem Objekt zugeordnete minimale Objektdistanz direkt proportional an das Datenvolumen der zur Visualisierung der dem betreffenden Objekt zugeordneten virtuellen Realität an die Clienteinrichtung eines Nutzers zu übertragenden Daten angepasst. Das heißt, dass der für die minimale Objektdistanz festgelegte Wert umso größer ist, je umfangreicher die mit einem Objekt verknüpfte Realität ist, respektive die sie kodierenden Daten sind - und umgekehrt. Hierdurch wird sichergestellt, dass auch im Falle einer sehr umfangreichen Ergänzung der sich auf ein Objekt beziehenden Realität die an die Clienteinrichtung zu übertragenden Daten so rechtzeitig ausgesendet werden, dass sie bis der Nutzer das betreffende Objekt erreicht, dieses also in der Realität wahrnimmt, von der Clienteinrichtung empfangen und von deren Verarbeitungseinrichtung, respektive durch die von dieser ausgeführte Programmanwendung (App), verarbeitet sowie unter Ergänzung der tatsächlich wahrgenommenen Realisiert visualisiert worden sind.

An dieser Stelle sei darauf hingewiesen, dass die eine virtuelle Realität kodierenden Daten durch den Betreiber des Serverdienstes (beispielsweise Anbieter einer entsprechenden Internetplattform) und/oder auch durch Inhaber oder Betreiber eines jeweiligen, mit einer virtuellen Realität verknüpften Objekts in die Datenbank des Serverdienstes eingepflegt werden können. Im letztgenannten Fall erhalten die Inhaber, Betreiber oder Verwalter von Objekten, wie beispielsweise eines Gebäudes, einer Sehenswürdigkeit, einer Verkaufseinrichtung oder einer sonstigen Dienstleistungseinrichtung, zu denen eine erweiterte Realität unter Nutzung einer dazu ausgestatteten Clienteinrichtung und der genannten Programmanwendung (App) vermittelbar sein soll, einen kommunikationstechnischen Zugang (beispielsweise Internetportal) zu den Einrichtungen des Serverdienstes, über welchen ihnen ein Upload entsprechender Daten ermöglicht wird. Beispielsweise kann dabei die in der Datenbank des Serverdienstes mit einem Objekt verknüpfte, respektive zu verknüpfende minimale Objektdistanz auch durch diejenige Instanz (Betreiber des Serverdienstes oder Inhaber, Betreiber, Verwalter des betreffenden Objekts) festgelegt werden, welche die sich auf das betreffende Objekt beziehenden, eine virtuelle Realität kodierenden Daten in die Datenbank des Serverdienstes einstellt.

Darüber hinaus kann die minimale Objektdistanz wiederholt an eine für die Übertragung der Daten zur Kodierung einer virtuellen Realität an eine jeweilige Clienteinrichtung zu erwartende Übertragungsgeschwindigkeit angepasst werden, bei welcher es sich, bezogen auf die jeweilige Clienteinrichtung, um eine zu erwartende Downloadgeschwindigkeit handelt. Auf die zu erwartende Downloadgeschwindigkeit könnte beispielsweise ausgehend von den Übertragungsverhältnissen bei der für das Tracking der Clienteirichtung ohnehin regelmäßig erfolgenden Übertragung von GPS-Daten der Clienteinrichtung an den Serverdienst geschlossen werden. Aber auch im Zusammenhang mit einer Lokalisierung der Clienteinrichtung auf der Grundlage von Zellinformationen könnte es möglich sein, auf die zu erwartende Downloadgeschwindigkeit zu schließen.

Alternativ oder zusätzlich zur Anpassung an die zu erwartende Downloadgeschwindigkeit kann der für die minimale Objektdistanz mit einem jeweiligen Objekt in der Datenbank des Serverdienstes verknüpfte Wert für die minimale Objektdistanz aber auch angepasst an das beim Tracking der mobilen Clienteinrichtung festgestellte Bewegungsverhalten des Nutzers verändert werden. So ist beispielsweise, aufgrund des Trackings eines eine Clienteinrichtung mit sich führenden Nutzers, serverseitig die jeweilige Bewegungsrichtung des Nutzers bekannt. Wird nun hierbei festgestellt, dass sich der Nutzer in Richtung eines mit Daten zur Visualisierung einer virtuellen Realität verknüpften Objekts bewegt, kann außerdem seine Bewegungsgeschwindigkeit festgestellt werden.

Es ist dann möglich, die zu dem betreffenden Objekt in der Datenbank des Serverdienstes vermerkte minimale Objektdistanz zu vergrößern, sofern sich der Nutzer beispielsweise mit einer höheren Geschwindigkeit als der üblichen Fußgängergeschwindigkeit (typischerweise wird hierfür eine Geschwindigkeit von 3 km/h bis 5 km/h angenommen) bewegt. Behält der Nutzer seine Bewegungsrichtung bei, so hat dies zur Folge, dass die Übertragung der die mit dem Objekt verknüpfte virtuelle Realität kodierenden Daten an die Clienteinrichtung des Nutzers eher gestartet wird. Hierdurch wird sichergestellt, dass die betreffenden Daten durch die Clienteinrichtung des Nutzers so rechtzeitig verarbeitet werden können, dass dem Nutzer die durch sie kodierte virtuelle Realität vorzugsweise genau dann visualisiert wird, wenn er auch des entsprechenden Objekts in der Realität ansichtig wird. Umgekehrt kann selbstverständlich die mit dem Objekt verknüpfte minimale Objektdistanz verringert werden, wenn sich der Nutzer entsprechend langsam auf dieses zubewegt.

Die zuletzt angesprochenen Verfahrensgestaltungen, denen zufolge die minimale Objektdistanz an das Bewegungsverhalten eines das Verfahren mit einer entsprechenden Clienteinrichtung verwendenden Nutzers und/oder an die aus der Sicht dieser Clienteirichtung zu erwartende Downloadgeschwindigkeit für die Übertragung der Daten zu der mit dem jeweiligen Objekt verknüpften Realität angepasst wird, bedingen es, dass in der bei dem Serverdienst gehaltene Datenbank gewissermaßen eine mehrdimensionale Matrix abgebildet werden muss. Dabei müssen die für minimale Objektdistanz sowohl in Zuordnung zu den einzelnen in der Datenbank verwalteten Objekten als auch in Zuordnung zu unterschiedlichen Nutzern des Dienstes, respektive zu den von ihnen dabei verwendeten Clienteinrichtungen, jeweils unterschiedliche Werte in der Datenbank (dabei zudem gegebenenfalls dynamisch veränderlich) vermerkt werden.

Gemäß einer Weiterbildung des Verfahrens und seiner zuvor beschriebenen Abläufe kann dieses außerdem eine Verdeckungserkennung, eine sogenannte Occlusion Detection, einbeziehen. Hierbei erfolgt zwar ein rechtzeitiger Pre-Load der mit einem Objekt verknüpften Daten zur Visualisierung einer virtuellen Realität an eine Clienteinrichtung eines sich in Richtung dieses Objekts bewegenden Nutzers. Jedoch werden diese Daten nach ihrer vollständigen Übertragung auf die Clienteinrichtung dann möglicherweise nicht sofort visualisiert, nämlich dann, wenn mittels der von dem Nutzer getragenen VR-Brille oder einer von ihm verwendeten Kamera seines Mobilfunkgeräts festgestellt wird, dass die Sicht auf das betreffende Objekt zunächst noch durch ein Hindernis verdeckt ist. Erst, wenn diese Occlusion (Verdeckung) nicht mehr gegeben und das betreffende Objekt für den Nutzer zumindest teilweise zu sehen ist, werden dann die mit diesem verknüpften Daten, zur Ergänzung der vom Nutzer wahrgenommenen Realität durch eine virtuelle Realität, visualisiert.

Entsprechend einer weiteren vorgesehenen vorteilhaften Ausgestaltung des Verfahrens kann dieses noch dadurch weitergebildet sein, dass zwischen Clienteinrichtungen das Verfahren verwendender Nutzer eine Peer-to-Peer-Übertragung von eine virtuelle Realität vermittelnden Daten möglich ist. Eine solche Übertragung kann beispielsweise mittels Bluetooth erfolgen. Ein sich zwar in der Nähe eines mit einer virtuellen Realität verknüpften Objekts befindender Nutzer, respektive dessen Clienteinrichtung, kann hierdurch die diese virtuelle Realität kodierenden Daten noch vor dem Unterschreiten der mit dem Objekt gekoppelten minimalen Objektdistanz von der Clienteinrichtung eines anderen Nutzers empfangen.

Eine spätere Übertragung durch den Serverdienst ist dann nicht mehr erforderlich. Es dürfte hierbei ohne weiteres realisierbar sein, dass die Einrichtungen des Serverdienstes eine entsprechende Information erhalten, sofern die mit einem Objekt verknüpften Daten zur Visualisierung einer virtuellen Realität bei einer die minimale Objektdistanz unterschreitenden Clienteinrichtung bereits vorliegen. So könnte durch die betreffende Clienteinrichtung nach dem Peer-to-Peer-Empfang der betreffenden Daten beispielsweise zusammen mit den von ihr wiederholt an die Servereinrichtung übertragenen GPS-Daten ein entsprechendes Kennzeichen/Merkmal an die Einrichtungen des Serverdienstes übertragen werden.

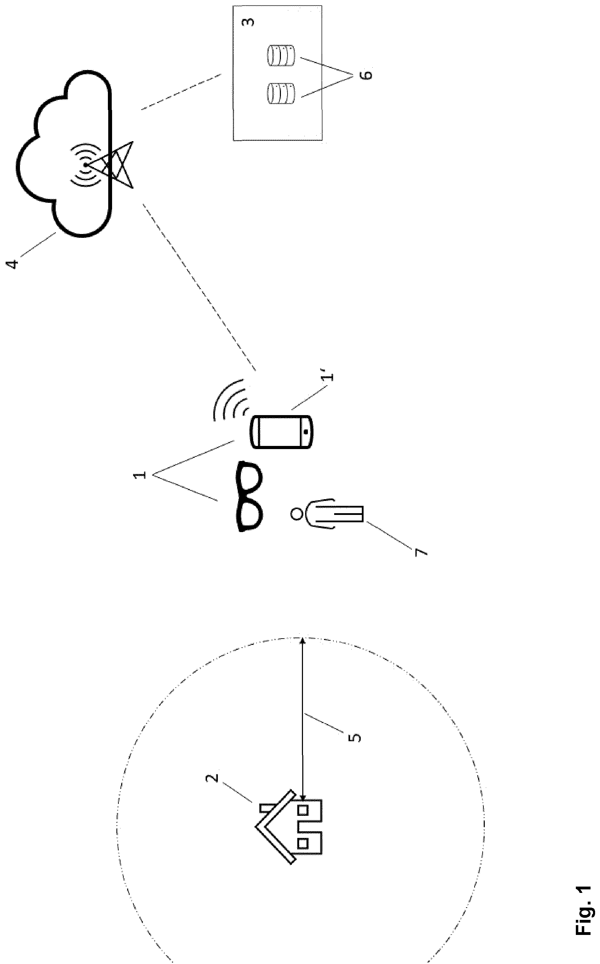

Anhand der Fig. 1 soll in der Art eines Ausführungsbeispiels ein möglicher Ablauf des Verfahrens dargestellt werden. Gemäß der grobschematischen Darstellung der Fig. 1 bewegt sich ein eine mobile Clienteinrichtung 1 - beispielsweise in Form einer mit einem Endgerät 1' (nachfolgend verkürzend Mobilfunkgerät 1') zur Nutzung des Mobilfunknetzes 4 gekoppelten VR-Brille - mit sich führender Nutzer 7 im öffentlichen Raum. Auf seinem Mobilfunkgerät 1' hat er zuvor eine App (Programmanwendung) zur Nutzung des Verfahrens gestartet. Aufgrund dessen ist seine Clienteinrichtung 1 über das Mobilfunknetz 4 mit Einrichtungen eines Serverdienstes 3 verbunden. Durch den Serverdienst 3 wird der Nutzer auf der Grundlage von GPS-Daten, welche der Serverdienst 3 nach dem Starten der vorgenannten App periodisch von der Clienteinrichtung 1 des Nutzers 7 empfängt, getrackt.

In einer Datenbank 6 des betreffenden Serverdienstes 3 werden zu einer Mehrzahl von Objekten 2 in der Stadt, innerhalb welcher sich der Nutzer 7 beispielsweise bewegt, Daten zur Kodierung einer virtuellen Realität mit den betreffenden Objekten 2, respektive mit Daten zu deren Standort innerhalb der Stadt, verknüpft. Die einzelnen Objekte 2, beispielsweise geschichtsträchtige oder architektonisch herausragende Gebäude, sonstige bauliche oder natürliche Sehenswürdigkeiten, Museen oder Dienstleistungseinrichtungen, sind hierbei mit unterschiedlichen, sich jeweils in spezieller Weise auf sie beziehenden Daten verknüpft. Wie früher bereits ausgeführt, kann es sich bei diesen Daten beispielsweise um Daten handeln, die bei einer Visualisierung Zeichnungen oder zusätzliche bildliche Darstellungen zu einem Gebäude oder auch textliche Informationen zu architektonischen oder historischen Hintergründen oder zu den Öffnungszeiten einer mit ihnen verknüpften Dienstleistungseinrichtung vermitteln.

Mit jedem der in der Datenbank 6 erfassten Objekte 2 ist außerdem ein Wert für eine minimale (vorzugsweise speziell auf den betreffenden Nutzer bezogene) Objektdistanz 5 verknüpft, nämlich für eine Distanz zwischen einer Clienteinrichtung 1 eines das Verfahren verwendenden Nutzers 7 und dem betreffenden Objekt 2, bei deren Unterschreiten mit diesem Objekt 2 in der Datenbank 6 des Serverdienstes 3 verknüpfte, eine virtuelle Realität kodierende Daten an die Clienteinrichtung 1 des vorgenannten Nutzers 7 übertragen werden. Unterschreitet also der betreffende Nutzer 7, respektive die von ihm mitgeführte Clienteinrichtung 1, die minimale Objektdistanz 5, gelangt also in eine entsprechende Nähe zu einem in der Datenbank 6 des Serverdienstes 3 erfassten Objekts 2, so werden die dort zu diesem Objekt 2 gehaltenen Daten, sofern sie sich auf Informationen zu einer von dem Nutzer 7 präferierten Kategorie beziehen, an die von dem Nutzer 7 mitgeführte Clienteinrichtung 1 (dessen Mobilfunkgerät 1', beispielsweise Smartphone) übermittelt und dort nach ihrem vollständigen Empfang zum Zweck ihrer Visualisierung verarbeitet. Mit Blick auf das hier betrachtete Ausführungsbeispiel wird also in Ergänzung zu der von dem Nutzer 7 durch die gleichzeitig als transparentes Display fungierenden Gläser der VR-Brille in Form des Objekts wahrgenommenen Realität eine virtuelle Realität der zuvor schon angesprochenen Art visualisiert.

## Patentansprüche

1. Verfahren zur Vermittlung einer erweiterten Realität an einer zumindest ein Endgerät (1') zur Nutzung des Mobilfunknetzes (4) umfassenden mobilen Clienteinrichtung (1), gemäß welchem in einem Speicher der von einem Nutzer (7) mitgeführten Clienteinrichtung (1) gehaltene Daten, welche eine mit einem Objekt (2) an einem aktuellen Aufenthaltsort des Nutzers (7) verknüpfte virtuelle Realität kodieren, durch eine von einer Verarbeitungseinrichtung der Clienteinrichtung (1) ausgeführte Programmanwendung verarbeitet sowie, in Ergänzung zu dem durch den Nutzer (7) an diesem Aufenthaltsort an der Clienteinrichtung unmittelbar oder mittels einer Kamera der Clienteinrichtung (1) optisch erfassten Objekt (2), visualisiert werden, wobei die Clienteinrichtung (1) während der Ausführung der Programmanwendung über das Mobilfunknetz (4) mit einem Serverdienst (3) verbunden ist und durch diesen hinsichtlich ihrer jeweiligen geolokalen Position getrackt wird, wobei
a.) die mit dem Objekt (2) verknüpften, zur Visualisierung mittels der Programmanwendung durch die Verarbeitungseinrichtung der Clienteinrichtung (1) zu verarbeitenden Daten in einer Datenbank (6) des Serverdienstes (3) gehalten und erst beim Unterschreiten einer minimalen, in Einrichtungen des Serverdienstes (3) hinterlegten Objektdistanz (5), nämlich einer minimalen Distanz zwischen der Clienteinrichtung (1) und dem mit den Daten verknüpften Objekt (2) von dem Serverdienst (3) an die Clienteinrichtung (1) zur Ablage in deren Speicher sowie zu ihrer Visualisierung übertragen werden, sofern eine diesen Daten in der Datenbank (6) des Serverdienstes (3) zugeordnete Kategorie in einer ebenfalls in dieser Datenbank (6) gehaltenen Präferenzliste des Nutzers (7) der Clienteinrichtung (1) enthalten ist; und **dadurch gekennzeichnet dass**
b.) der Wert für die minimale Objektdistanz (5) ein speziell auf das jeweilige Objekt (2) bezogener Wert ist, welcher ausgehend von einem initialen Wert veränderlich und direkt proportional ist zum Datenvolumen der zur Visualisierung der dem betreffenden Objekt (2) zugeordneten virtuellen Realität an die Clienteinrichtung (1) zu übertragenen Daten.

2. Verfahren nach Anspruch 1, **dadurch gekennzeichnet, dass** zusammen mit den zur Visualisierung der einem Objekt (2) zugeordneten virtuellen Realität an die Clienteinrichtung (1) übertragenen Daten zumindest der Wert der minimalen Objektdistanz (5) an die Clienteinrichtung (1) übertragen wird und dass ein die Daten zu der mit dem Objekt (2) verknüpften virtuellen Realität nach ihrem Empfang aufnehmender Speicherbereich der Clienteinrichtung (1) gelöscht oder zumindest zum Überschreiben freigegeben wird, wenn die Distanz der von dem sich bewegenden Nutzer (7) mitgeführten Clienteinrichtung (1) zu dem betreffenden Objekt (2) die minimale Objektdistanz gemäß dem dazu von der Clienteinrichtung (1) empfangenen Wert um ein vorgegebenes Maß übersteigt.

3. Verfahren nach Anspruch 1 oder 2, **dadurch gekennzeichnet, dass** die minimale Objektdistanz (5) wiederholt angepasst wird an eine für die Übertragung der Daten zur Kodierung einer virtuellen Realität an die Clienteinrichtung (1) zu erwartende Übertragungsgeschwindigkeit.

4. Verfahren nach einem der Ansprüche 1 bis 3, **dadurch gekennzeichnet, dass** der in den Einrichtungen des Serverdienstes (3) gehaltene Wert für die minimale Objektdistanz (5) an das beim Tracking der mobilen Clienteinrichtung (1) festgestellte Bewegungsverhalten des Nutzers (7) angepasst wird, indem der Wert für die minimale Objektdistanz (5) angepasst wird an die in der Bewegungsrichtung zum Objekt (2) festgestellte Bewegungsgeschwindigkeit des Nutzers (7), wobei dieser Wert mit zunehmender Bewegungsgeschwindigkeit des Nutzers (7) vergrößert wird.

5. Verfahren nach einem der Ansprüche 1 bis 4, **dadurch gekennzeichnet, dass** dieses eine Verdeckungserkennung einschließt, wonach eine mit einem Objekt (2) verknüpfte virtuelle Realität nach dem vollständigen Empfang und der Verarbeitung der sie kodierenden Daten durch die Clienteinrichtung (1) noch nicht sogleich visualisiert wird, sofern mithilfe dazu ausgebildeter Mittel der Clienteinrichtung (1) erkannt wird, dass die Sicht auf das betreffende Objekt (2) für den die Clienteinrichtung (1) mit sich führenden Nutzer (7) verdeckt ist.

6. Verfahren nach einem der Ansprüche 1 bis 5, **dadurch gekennzeichnet, dass** die von einer Clienteinrichtung (1) zu einem Objekt (2) empfangenen, eine virtuelle Realität kodierenden Daten von der Clienteinrichtung (1) an andere in ihrer Nähe befindliche, das Verfahren nutzende Clienteinrichtungen Peer-to-Peer übertragen und dadurch mit diesen geteilt werden.

## Claims

1. Method for conveying an extended reality on a mobile client device (1) comprising at least one terminal (1') for using the mobile radio network (4), which involves data held in a memory of the client device (1), which is carried by a user (7), that encode a virtual reality linked to an object (2) at a current location of the user (7) being processed by a program application executed by a processing device of the client device (1) and being visually displayed in addition to the object (2) optically detected, directly or by means of a camera of the client device (1), on the client device by the user (7) at this location, the client device (1) being connected to a server service (3) via the mobile radio network (4) during the execution of the program application and being tracked by said server service in respect of the respective geolocal position of said client device, wherein
a.) the data linked to the object (2) and intended to be processed by the processing device of the client device (1) by means of the program application for visual display are held in a database (6) of the server service (3) and, only when a minimum object distance (5) stored in devices of the server service (3), specifically a minimum distance between the client device (1) and the object (2) linked to the data, is not maintained, transmitted from the server service (3) to the client device (1) for storage in the memory thereof, and for visual display of said data, if a category assigned to these data in the database (6) of the server service (3) is included on a list of preferences of the user (7) of the client device (1), which list is likewise held in this database (6); **characterized in that**
b.) the value for the minimum object distance (5) is a value related specifically to the respective object (2) and is variable from an initial value and directly proportional to the volume of data in the data that are to be transmitted to the client device (1) for the purpose of visually displaying the virtual reality associated with the relevant object (2).

2. Method according to Claim 1, **characterized in that** at least the value of the minimum object distance (5) is transmitted to the client device (1) together with the data transmitted to the client device (1) for the purpose of visually displaying the virtual reality associated with an object (2), and **in that** a memory area of the client device (1) that accommodates the data for the virtual reality linked to the object (2) after said data have been received is erased, or at least opened to overwriting, if the distance between the client device
(1) carried by the moving user (7) and the relevant object
(2) exceeds the minimum object distance by a predefined amount according to the value received by the client device (1) **in that** regard.

3. Method according to Claim 1 or 2, **characterized in that** the minimum object distance (5) is repeatedly brought into line with a transmission speed that can be expected for transmitting the data for encoding a virtual reality to the client device (1).

4. Method according to one of Claims 1 to 3, **characterized in that** the value for the minimum object distance (5) that is held in the devices of the server service (3) is brought into line with the movement behaviour of the user (7) determined when tracking the mobile client device (1) by bringing the value for the minimum object distance (5) into line with the speed of movement of the user (7) determined in the direction of movement towards the object (2), this value being increased as the speed of movement of the user (7) increases.

5. Method according to one of Claims 1 to 4, **characterized in that** said method includes a concealment detection, according to which a virtual reality linked to an object (2) is not visually displayed immediately when the data encoding said virtual reality have been received completely and processed by the client device (1), but rather means of the client device (1) that are designed for this purpose are used to detect that the view of the relevant object (2) is concealed from the user (7) carrying the client device (1).

6. Method according to one of Claims 1 to 5, **characterized in that** the data encoding a virtual reality that are received by a client device (1) in relation to an object (2) are transmitted in peer-to-peer fashion from the client device (1) to other, nearby client devices using the method and thereby shared with said devices.

## Revendications

1. Procédé permettant de transmettre une réalité augmentée sur un dispositif client mobile (1) comprenant au moins un terminal (1') pour utiliser le réseau de téléphonie mobile (4), selon lequel des données maintenues dans une mémoire du dispositif client (1) qu'un utilisateur (7) porte sur soi et qui codent une réalité virtuelle liée à un objet (2) sur un lieu actuel de l'utilisateur (7) sont traitées par une application de programme exécutée par un dispositif de traitement du dispositif client (1) ainsi que visualisées en complément à l'objet (2) détecté optiquement par l'utilisateur (7) sur ce lieu au niveau du dispositif client, directement ou au moyen d'une caméra du dispositif client (1), dans lequel, pendant l'exécution de l'application de programme, le dispositif client (1) est relié par l'intermédiaire du réseau de téléphonie mobile (4) à un service de serveur (3) et est suivi par celui-ci concernant sa position géographique locale respective, dans lequel
a.) les données liées à l'objet (2), à traiter par le dispositif de traitement du dispositif client (1) pour la visualisation au moyen de l'application de programme sont maintenues dans une base de données (6) du service de serveur (3), et sont transmises par le service de serveur (3) au dispositif client (1) pour être mémorisées dans la mémoire de celui-ci et pour être visualisées seulement lorsqu'une distance d'objet minimale (5), mémorisée dans des dispositifs du service de serveur (3), notamment une distance minimale entre le dispositif client (1) et l'objet lié aux données (2), est soupassée, dans la mesure où une catégorie associée à ces données dans la base de données (6) du service de serveur (3) est contenue sur une liste de préférence de l'utilisateur (7) du dispositif client (1) également maintenue dans cette base de données (6) ; et
**caractérisé en ce que**
b.) la valeur pour la distance d'objet minimale (5) est une valeur se référant spécialement à l'objet (2) respectif et qui, en partant d'une valeur initiale, est variable et directement proportionnelle au volume de données des données à transmettre au dispositif client (1) pour la visualisation de la réalité virtuelle associée à l'objet concerné (2).

2. Procédé selon la revendication 1, **caractérisé en ce que** conjointement avec les données transmises au dispositif client (1) pour la visualisation de la réalité virtuelle associée à un objet (2), au moins la valeur de la distance d'objet minimale (5) est transmise au dispositif client (1), et **en ce qu'**une zone de mémoire du dispositif client (1) recevant les données concernant la réalité virtuelle liée à l'objet (2) après leur réception est supprimée ou du moins validée pour être écrasée lorsque la distance du dispositif client (1) que l'utilisateur (7) en mouvement porte sur soi à l'objet concerné (2) dépasse d'une mesure prédéfinie la distance d'objet minimale selon la valeur reçue du dispositif client (1).

3. Procédé selon la revendication 1 ou 2, **caractérisé en ce que** la distance d'objet minimale (5) est adaptée à plusieurs reprises à une vitesse de transmission à prévoir pour la transmission des données pour le codage d'une réalité virtuelle au niveau du dispositif client (1) .

4. Procédé selon l'une quelconque des revendications 1 à 3, **caractérisé en ce que** la valeur maintenue dans les dispositifs du service de serveur (3) pour la distance d'objet minimale (5) est adaptée au comportement de déplacement de l'utilisateur (7) constaté lors du suivi du dispositif client mobile (1), **en ce que** la valeur pour la distance d'objet minimale (5) est adaptée à la vitesse de déplacement de l'utilisateur (7) constatée dans la direction de mouvement vers l'objet (2), dans lequel cette valeur augmente avec une vitesse de mouvement croissante de l'utilisateur (7).

5. Procédé selon l'une quelconque des revendications 1 à 4, **caractérisé en ce qu'**il comprend une reconnaissance d'occultation, selon laquelle une réalité virtuelle liée à un objet (2) n'est pas tout de suite visualisée par le dispositif client (1) après réception complète et traitement des données qui la codent dans la mesure où des moyens réalisés à cet effet du dispositif client (1) permettent de reconnaître que la vue sur l'objet concerné (2) est occultée pour l'utilisateur (7) qui porte sur soi le dispositif client (1).

6. Procédé selon l'une quelconque des revendications 1 à 5, **caractérisé en ce que** les données reçues par un dispositif client (1) au sujet d'un objet (2) et codant une réalité virtuelle sont transmises de poste à poste par le dispositif client (1) à d'autres dispositifs clients se trouvant à proximité et utilisant le procédé et sont ainsi partagées avec ceux-ci.
